# EUROPEAN PATENT APPLICATION

(11) **EP 1 024 438 A2**
(43) Date of publication of application: **02.08.2000**
(21) Application number: 00101720.1
(22) Date of filing: 27.01.2000
(51) Int. Cl.: G06F 17/30

(54) **System for making and publishing a homepage**

(30) Priority: 27.01.1999 JP 1914699
(71) Applicant: Digital Print Corporation, Tokyo (JP)
(72) Inventor: Ebata, Hiroto, c/o Digital Print Corporation, Tokyo (JP); Aoki, Yasuo, c/o Digital Print Corporation, Tokyo (JP); Imai, Naoki, c/o Digital Print Corporation, Tokyo (JP); Ozaki, Kenichi, c/o Dumbonet Systems, Inc., Tokyo (JP)
(74) Representative: Baronetzky, Klaus, Dipl.-Ing.

(57) **Abstract**

The present invention provides a system for making and publishing a homepage. The system comprises at least a client having a software means for making a homepage, and a server having means for managing and using the homepage made, wherein the software means of the client further includes a homepage making unit, a network connecting unit and a data transmission unit, whilst the server includes a verifying means for referring an account information received from the network connecting unit of the client to previously stored data, and a data receiving/managing means for receiving data transmitted by the data transmission unit, so that after the network connecting unit receives, from the verifying means of the server, a signal representing that the account is effective, then data are automatically transmitted from the data transmission unit to the data receiving/managing means of the server, whereby at the same time when the client is made into connect with a network, the client automatically sends an HTML file for homepage and data to the server.

## Description

The present invention relates to a system for making and publishing a homepage wherein the system comprises client computers including a homepage preparation means and a server computer having a homepage management/using means.

In recent years, as the internet have become wide-diffused, the requirement for making a homepage including various contents or images taken by users and publishing the homepage on the internet has been on the increase. In response to this requirement, internet service providers offer homepage hosting services.

In accordance with the conventional method of making the homepage, an HTML (hyper text markup language) file including informations to be published on WWW (world wide web) is prepared visually by user or prepared on text and edited by use of an HTML editing software such as an HTML editor. The homepage prepared by the software generally comprises contents which include data such as text data and image data, as well as access counter, chat and bulletin board obtained via CGI (common gateway interface). For example, a unit of the contents such as image data is present in other file than he above HTML file, wherein the image data are located at a previously designated directory on the server computer so that the homepage can correctly be inspected or executed by browser.

In order to prepare the homepage, images data are prepared by a camera such as a digital camera. The images data are then stored in a storage device such as a memory in a personal computer by use of a data transfer software. The images data are processed to an available format for homepage by use of a software, so that the image and text are prepared and edited by the HTML editor software. The user makes a procedure of becoming a subscriber to the internet service provider and installed a personal computer to be connected to the internet service provider, so as to log-on the network. If the user has already been the subscriber to the internet service provider, it is possible to log-on the network via the internet service provider. A file transfer protocol is used to transfer data such as HTML documents and image files to a designated directory of the server computer.

In the system for making the homepage and for managing and using the same, the editor software is independent from a software to be used for connecting a user's personal computer to the server computer of the internet service provider. In addition to making the homepage, the users have to make procedures for becoming the subscribers to the internet service providers and further have to set and connect the client computers or user's computers to the server computer of the internet service provider. The users also have to use the HTML editor software, an image preparation/processing software, and a file transfer protocol transfer software. Namely, the users have to use a plurality of the software. Furthermore, in general, the users have to administrate or manage their directories on the server computer themselves in accordance with regulations provided by the internet service provider, where the HTML documents and image data are stored at the their directories on the server computer. Those operations are complicated. Uniticularly, the operations are never easy for beginners, for which reason the beginner's intention to have their homepages may be weaken.

In order to utilize the contents such as the access counter and the bulletin board, it is necessary to incorporate a CGI call instruction into the HTML file so as to call the CGI in the server computer. In order to incorporate the correct or appropriate CGI call instruction into the HTML file, a sufficient knowledge such as a CGI script is necessary. Namely, it is necessary for programming to know a state of the server computer on which the homepage is established. It is difficult for the general users not having a high computer skill to do programming, provided that the state of the server computer is recognized.

In the above circumstances, it had been required to develop a novel system for making and publishing a homepage free from the above problem.

Accordingly, it is an object of the present invention to provide a novel system for making and publishing a homepage free from the above problems.

It is a further object of the present invention to provide a novel system for making and publishing a homepage, wherein a client side is available to automatically and successively operate a process of logging-on the internet, a further process of preparing and editing images and texts for homepage and a further more process of transferring the edited image and text data, whilst a server is also available to automatically and successively operate a process of verifying the logging-on the internet, and a process of transferring, storing and managing homepage data, and also a process of administrating the directories.

The present invention provides a system for making and publishing a homepage. The system comprises at least a client having a software means for making a homepage, and a server having means for managing and using the homepage made, wherein the software means of the client further includes a homepage making unit, a network connecting unit and a data transmission unit, whilst the server includes a verifying means for referring an account information received from the network connecting unit of the client to previously stored data, and a data receiving/managing means for receiving data transmitted by the data transmission unit, so that after the network connecting unit receives, from the verifying means of the server, a signal representing that the account is effective, then data are automatically transmitted from the data transmission unit to the data receiving/managing means of the server, whereby at the same time when the client is made into connect with a network, the client automatically sends an HTML file for homepage and data to the server.

The above and other objects, features and advantages of the present invention will be apparent from the following descriptions.

Preferred embodiments according to the present invention will be described in detail with reference to the accompanying drawings.

FIG. 1 is a schematic block diagram illustrative of a novel system for making and publishing a homepage in a first embodiment in accordance with the present invention.

FIG. 2 is a flow chart illustrative of operations of the homepage making means by the client.

FIG. 3 is a flow chart illustrative of operations of the setting input unit.

FIG. 4 is a flow chart illustrative of operations of the network connecting unit and the data transmission unit.

FIGS. 5 through 7 are flow charts illustrative of operations of the server in the system for making and publishing the homepage.

The first present invention provides a system for making and publishing a homepage. The system comprises at least a client having a software means for making a homepage, and a server having means for managing and using the homepage made, wherein the software means of the client further includes a homepage making unit, a network connecting unit and a data transmission unit, whilst the server includes a verifying means for referring an account information received from the network connecting unit of the client to previously stored data, and a data receiving/managing means for receiving data transmitted by the data transmission unit, so that after the network connecting unit receives, from the verifying means of the server, a signal representing that the account is effective, then data are automatically transmitted from the data transmission unit to the data receiving/managing means of the server, whereby at the same time when the client is made into connect with a network, the client automatically sends an HTML file for homepage and data to the server.

It is preferable that the client further has a setting/inputting means into which account informations and individual informations are written, so that the setting/inputting means stores written informations as setting files into a data storage means, whereby the network connecting unit and the data transmission unit of the client are individually operated to read at least one of account informations and individual informations from the setting file in the data storage means of the client.

It is also preferable that the server further has a homepage management means for allocating automatically a directory of each user in the data storage means in transmission of homepage data.

It is also preferable that a directory structure of each user is automatically made in a client side.

It is also preferable that the homepage making unit of the client further comprises a data input means, a data processing and editing means, and an HTML file making and editing means for making and editing an HTML file which includes an instruction to call CGI, so as to unitary place and configure contents obtained by making and editing data and by making and editing texts and by CGI.

The second present invention also provides a storage medium for storing a software to be used in a client in a system comprising : at least a client having a software means for making a homepage ; and a server having means for managing and using the homepage made, wherein the software further includes a homepage making unit, a network connecting unit and a data transmission unit, so that after the network connecting unit receives, from a server side, a signal representing that an account is effective, then data are automatically transmitted from the data transmission unit to the server side, whereby at the same time when the client is made into connect with a network, the client automatically sends an HTML file for homepage and data to the server.

It is preferable that the client further has a setting/inputting means into which account informations and individual informations are written, so that the setting/inputting means stores written informations as setting files into a data storage means, whereby the network connecting unit and the data transmission unit of the client are individually operated to read at least one of account informations and individual informations from the setting file in the data storage means of the client.

It is preferable that the homepage making unit of the client further comprises a data input means, a data processing and editing means, and an HTML file making and editing means for making and editing an HTML file which includes an instruction to call CGI, so as to unitary place and configure contents obtained by making and editing data and by making and editing texts and by CGI.

The third present invention provides a system for making and publishing a homepage, the system comprising at least a client having a software means for making a homepage, and a server having means for managing and using the homepage made, wherein the system further includes a homepage making unit, a network connecting unit and a data transmission unit, so that, through a network, a plurality of clients are distributed with such a software as operating that after the network connecting unit receives, from a server side, a signal representing that the account is effective, then data are automatically transmitted from the data transmission unit to the server side, whereby at the same time when the client is made into connect with a network, the client automatically sends an HTML file for homepage and data to the server.

It is preferable that the client further has a setting/inputting means into which account informations and individual informations are written, so that the setting/inputting means stores written informations as setting files into a data storage means, whereby the network connecting unit and the data transmission unit of the client are individually operated to read at least one of account informations and individual informations from the setting file in the data storage means of the client.

It is also preferable that the homepage making unit of the client further comprises a data input means, a data processing and editing means, and an HTML file making and editing means for making and editing an HTML file which includes an instruction to call CGI, so as to unitary place and configure contents obtained by making and editing data and by making and editing texts and by CGI.

The fourth present invention provides a private terminal device comprising : a homepage making means for fetching data and editing the fetched data and texts to make an HTML file and data ; a network connecting means for connecting through a network to a server ; and a data transmission means for transmitting homepage data made, wherein after the network connecting unit receives, from a server side, a signal representing that the account is effective, then data are automatically transmitted from the data transmission means to the server side, whereby at the same time when the terminal device is made into connect with the network, the terminal device automatically sends an HTML file for homepage and data to the server.

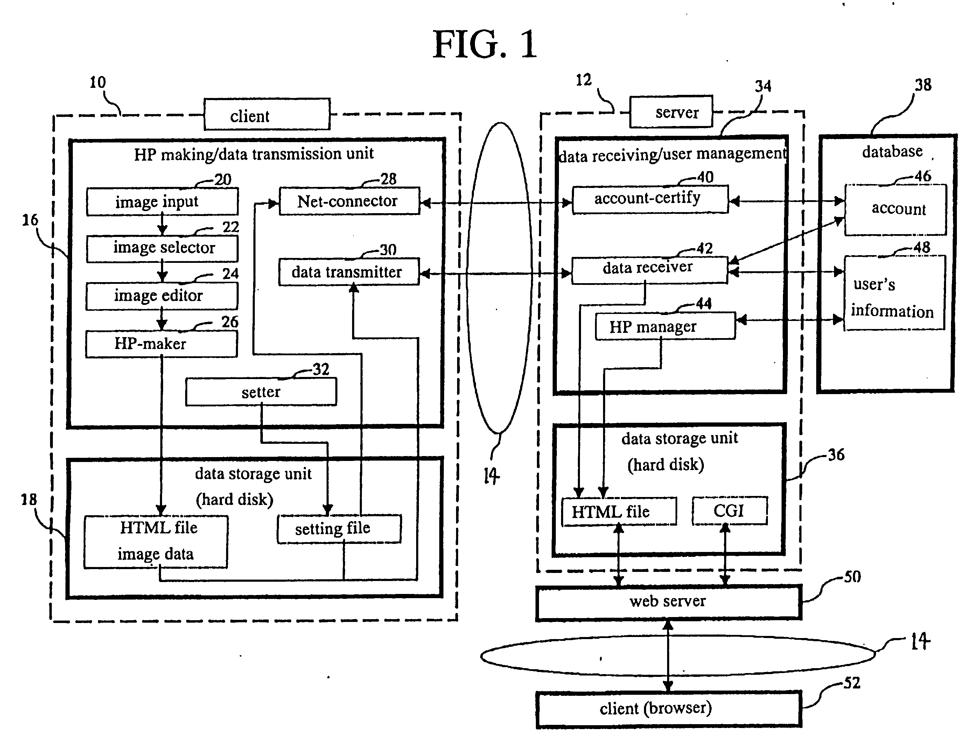

A first embodiment according to the present invention will be described in detail with reference to the drawings. FIG. 1 is a schematic block diagram illustrative of a novel system for making and publishing a homepage in a first embodiment in accordance with the present invention. The system comprises a client 10 such as a personal computer and a server 12 which are inter-connected to each other through a network 14 which may, for example, comprise communication lines. The client 10 has a homepage making/data transmission unit 16 and a data storage unit 18. The contents of the homepage comprises texts described in an HTML file and data that the HTML file browses. The data browsed by the HTML file may include static image data, dynamic image data and voice data. In this embodiment, the following descriptions will be made assuming that data browsed by the HTML file comprise image data, even the data should not be limited to the image data.

The homepage making/data transmission unit 16 has an image input unit 20, an image selecting unit 22, an image editing unit 24 for editing texts and images as the contents of the homepage and a homepage making unit 26 for making the texts and the images as the homepage contents. The homepage making/data transmission unit 16 further has a network connective unit 28 for connecting to the network, a data transmission unit 30 for transmitting homepage data and a setting/inputting unit 32 for inputting setting data.

The data storage unit 18 comprises an external memory device such as a hard disk for storing the HTML file and the image data made by the above homepage making unit 26 as well as storing a setting file. The network connective unit 28 and the data transmission unit 30 are so structured as to successively and automatically connect to the network and transmit the HTML file and the image data on the basis of the setting file stored in the data storage unit 18.

The server 12 has a data receiving/user managing unit 34, a data storage unit 36 such as a hard disk and a data base 38. The data receiving/user managing unit 34 comprises an account-certifying managing unit 40, a data receiving managing unit 42, and a homepage managing unit 44. The account-certifying managing unit 40 and the data receiving managing unit 42 are connected through the network 14 to the network connecting unit 28 and the data transmission unit 30 in the client side respectively. The account-certifying managing unit 40 is further connected to an account data base 46 in the data base 38. The data receiving managing unit 42 is also connected to the account data base 46 and a user information data base 48 in the data base 38. The user information data base 48 is further connected to the homepage managing unit 44.

The data receiving managing unit 42 and the homepage managing unit 44 are further connected to a data storage unit 36 which stores HTML files and image data prepared by the user in accordance with the data of the user information database 48. The data storage unit 36 is further connected to a web server 50. A client 52 as a homepage inspector makes an access through the network 14 to the web server 50.

In prior art, the user has to separately conduct a process of logging on the network and a process of the transmission of the homepage data such as the HTML file. Notwithstanding, in accordance with the present invention, both processes of logging on the network and the transmission of the homepage data such as the HTML file are successively and automatically conducted, whereby the user does not need to introduce and uses the file transfer protocol program.

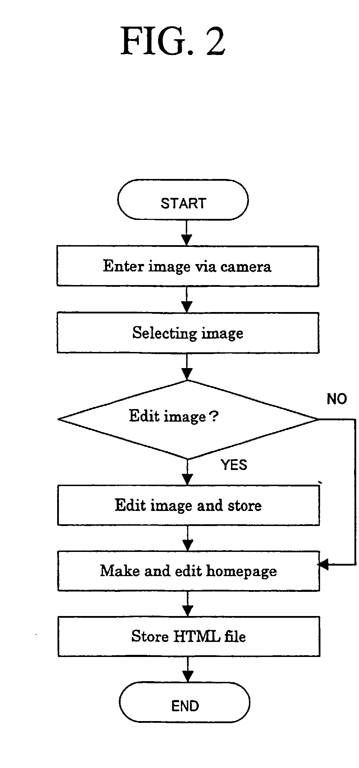

FIG. 2 is a flow chart illustrative of operations of the homepage making means by the client 10. A digital camera or a scanner is used to pick up the image to enter the image through the image input unit 20 to the client 10. The entered image is selected by the image selecting unit 22. The selected image is edited by the image editor unit 24 to have suitable format and size for being published on the homepage. The above units are realized by a software to perform above multiple functions automatically. The entered image is sent to the image selecting screen, so that the user may select the image to be edited and processed by use of a computer mouse and pushing buttons. The selected image may be adjusted in color correction, contrast, brightness, trimming, size and file size as well as other image effect by pushing the buttons. The user having no knowledge of image processing can easily make a processed image suitable to be published on the homepage. It is further possible to add an additional function of automatically correcting the image quality. It is furthermore possible to add a still additional function of allowing the user to prepare a processed GIF animation from the selected image.

In the homepage making unit 26, a homepage is prepared which includes the image and the text. On a homepage editor screen, the user selects a favorable one of many homepage templates previously prepared. The text and the edited image are then pasted on or entered into the selected homepage template to make an original homepage manuscript. The homepage editor screen has various function buttons for realizing various functions. It is possible to add the selected image with properties such as original image, link, and external link. The homepage editor screen is incorporated with a CGI call instruction editor means for editing an instruction to call, from the server, the CGI for obtaining various contents such as access counter, bulletin board, chat, and count down, so that they are easily selected by operating buttons to paste the same onto the homepage manuscript. There may be prepared many designs of the link buttons and many background designs to be selected by the user. A text box is also prepared to enable the user to make an individual or original HTML to insert the original HTML above a header or below a footer. The prepared homepage may be stored in the data storage unit 18 by a simple operation.

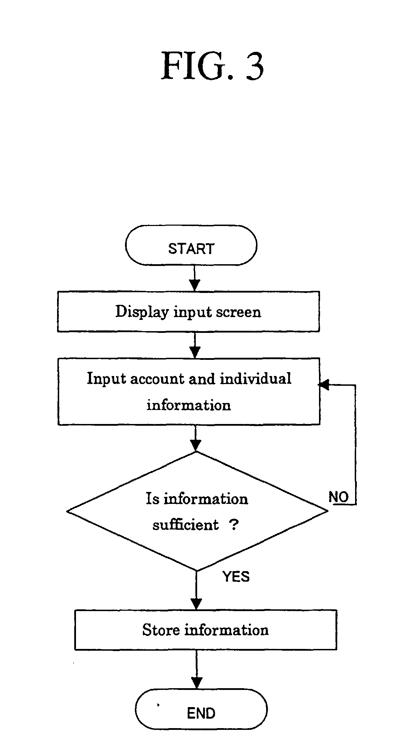

FIG. 3 is a flow chart illustrative of operations of the setting input unit 32. There are entered individual inflammations such as individual names as well as account informations such as ID and password previously given in obtaining a client software in the system of the present invention. The account informations have also been registered on the server, so that it is possible to use the account without any procedure of entry. The individual informations and the account informations are stored as the set data in the data storage unit. It is unnecessary to do the above operations for every times of connection to the internet.

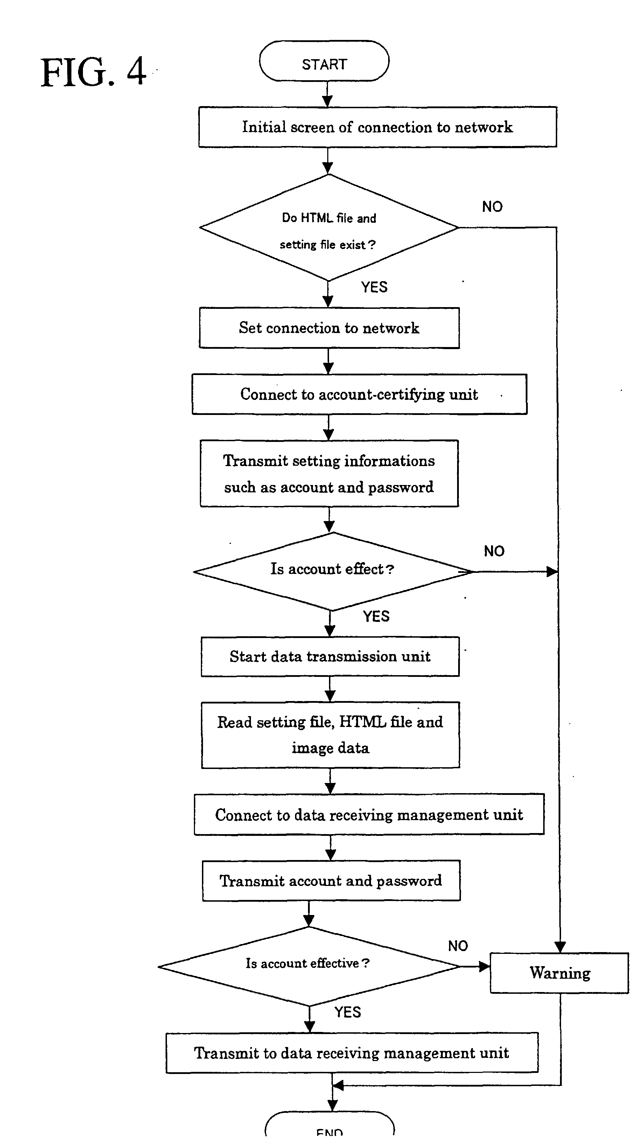

FIG. 4 is a flow chart illustrative of operations of the network connecting unit 28 and the data transmission unit 30. A network connecting initial screen is displayed. It is confirmed whether or not the HTML file and the setting file exist. If the file does not exist, a massage to the effect that the file does not exist is displayed and the operation is ended. If the files exist, then a connective setting for connecting the client to the network is made on the basis of the network connecting setting information stored in the client. Subsequently, a connection through a telephone line to the account-certifying managing unit 40 in the server side is initiated to send the account information recorded in the setting file in the data storage unit 18 in the client side. If the account is effective, then the data transmission unit 30 is started to read out the setting file and the HTML file in the data storage unit 18 as well as the image data so as to commence the connection to the data receiving management unit 42 in the server side. Further, the account and the password are transmitted. If the account and the password are effective, the setting file and the HTML file as well as the image data are transmitted to the data receiving management unit.

In accordance with the above data transmission system, the connection to the network and the transmission of the prepared homepage are automatically and successively conducted without using independent file transfer software.

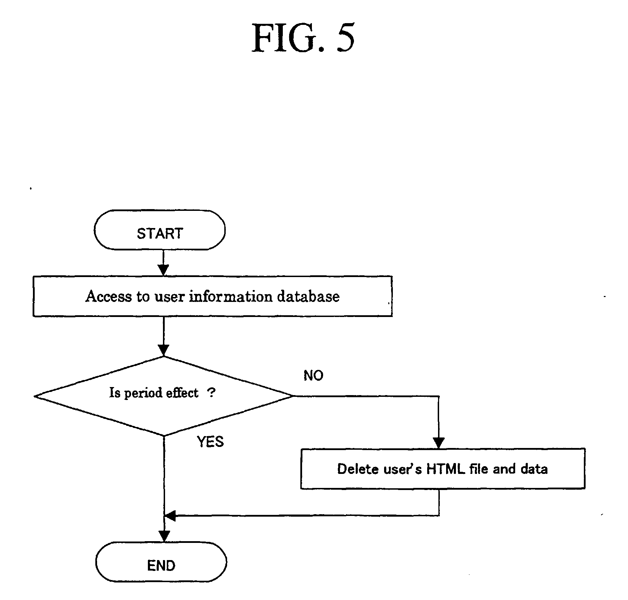

FIGS. 5 through 7 are flow charts illustrative of operations of the server in the system for making and publishing the homepage.

With reference to FIG. 5, the account-certifying management unit 40 in the server 12 refers the transmitted account ID and password to the account database 46 in the database 38 for connection to the client 10. If the account is effective, an enable signal is transmitted to the network connecting unit 28 in the client side.

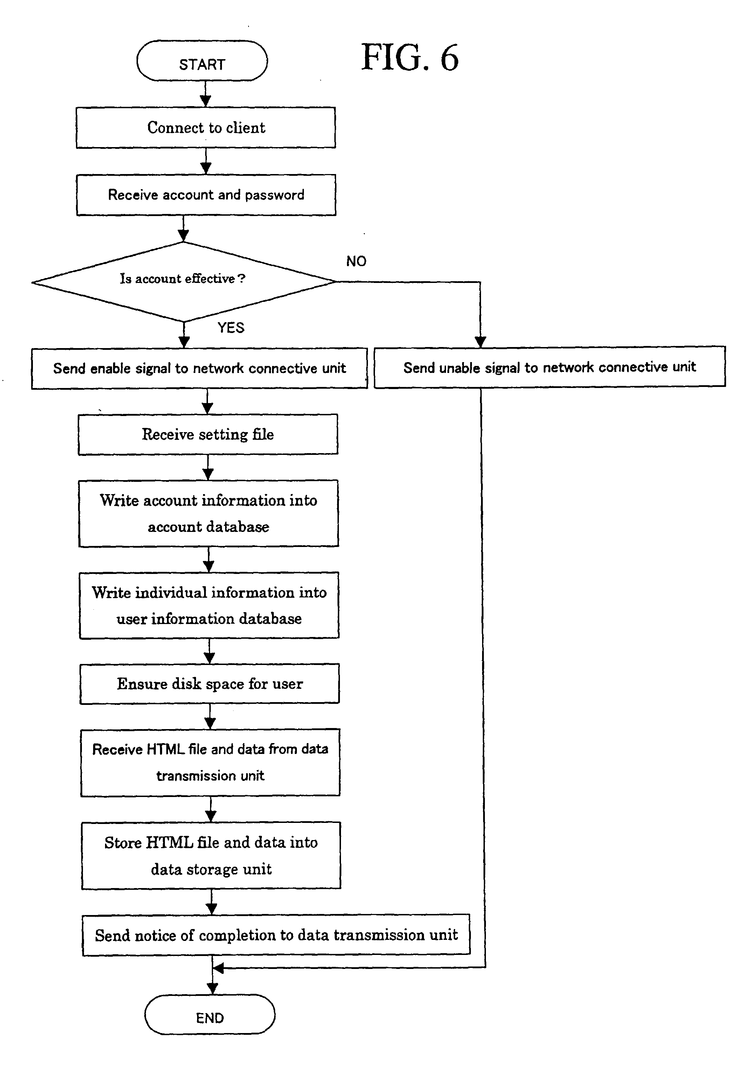

With reference to FIG. 6, the data receiving management unit 42 is connected to the client and then receives the account ID and the password. If the account ID an the password are effective, then data receiving management unit 42 receives the setting file from the data transmission unit 30. A date of starting the use and a usable flag or an unusable flag are written into the account database 46. The individual informations and if any category informations are written into the user information database 48.

In the data storage unit 36, a file disk space (directory) for user is ensured. The HTML file an the image data are fetched from the data transmission unit 30 and then written into the user directory. It is possible to allocate the directory in preparation of the homepage or prepare previously the directories for the individual accounts. The directory structure has previously been set in the client side to so provide the directory structure as being suitable for management by the server.

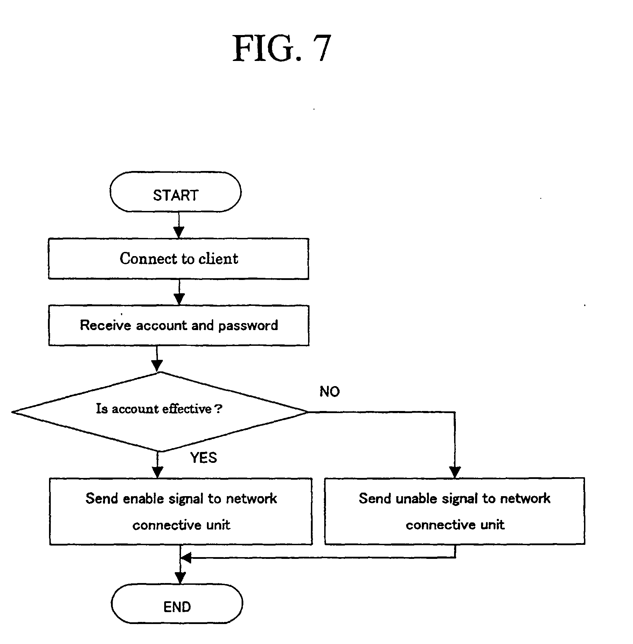

With reference to FIG. 7, it is possible that the homepage management unit 44 sets an effective time period in the file disk space in the data storage unit 36 on the basis of the informations of the user information database 48. If the effective time period expired, the server automatically delete the HTML file and the data.

As described above, in accordance with the novel system of making and publishing the homepage of the present invention, in order to utilize the contents such as the access counter and the bulletin board, an instruction is decided to call the CGI in the server side for incorporation of the same into the HTML file. These processes are automatically executed by the client system comprising the software incorporated in the client, without user's operation. The user can be made free from the requirements for high skill in the computer such as the CGI script, for example, programming in sufficient consideration of the status of the homepage server. This makes it possible for the general users having no high computer skill to utilize easily the contents such as the access counter and the bulletin board.

In accordance with the system of making and publishing the homepage of the present invention, namely, there is provided a system of automatically and successively conducting a process of connection to he network, and processes of making and editing the homepage, and a process of data transmission, so as to enable the computer beginner to easily make the homepage.

The client system may comprise the software means for making and editing the homepage and transmission of the data. The software may be distributed via any available storage mediums such as CD-ROM or via the network which allows the user to conduct the down-load from the server. Since the individual account ID and password are distributed along with the software, the user enable to make the homepage and connect to the network without any procedure for entry. It is also possible to enable the server to supervise the homepage to be published to prevent harmful or unmoral homepage which disturb the public orders.

It is unnecessary to limit the client to the personal computer. Any available and configuable terminal devices may be used as the clients. For example, a private terminal device capable of inputting the images and editing the texts is installed in convenience stores, so that the homepage data prepared in this terminal device is made into connect with the network to send the homepage data to the server automatically.

Whereas modifications of the present invention will be apparent to a person having ordinary skill in the art, to which the invention pertains, it is to be understood that embodiments as shown and described by way of illustrations are by no means intended to be considered in a limiting sense. Accordingly, it is to be intended to cover by claims all modifications which fall within the spirit and scope of the present invention.

## Claims

1. A system for making and publishing a homepage, said system comprising at least a client having a software means for making a homepage, and a server having means for managing and using said homepage made,
characterized in that said software means of said client further includes a homepage making unit, a network connecting unit and a data transmission unit, whilst said server includes a verifying means for referring an account information received from said network connecting unit of said client to previously stored data, and a data receiving/managing means for receiving data transmitted by said data transmission unit,
so that after said network connecting unit receives, from said verifying means of said server, a signal representing that said account is effective, then data are automatically transmitted from said data transmission unit to said data receiving/managing means of said server, whereby at the same time when said client is made into connect with a network, said client automatically sends an HTML file for homepage and data to said server.

2. The system as claimed in claim 1, characterized in that said client further has a setting/inputting means into which account informations and individual informations are written, so that said setting/inputting means stores written informations as setting files into a data storage means, whereby said network connecting unit and said data transmission unit of said client are individually operated to read at least one of account informations and individual informations from said setting file in said data storage means of said client.

3. The system as claimed in claim 1, characterized in that said server further has a homepage management means for allocating automatically a directory of each user in said data storage means in transmission of homepage data.

4. The system as claimed in claim 1, characterized in that a directory structure of each user is automatically made in a client side.

5. The system as claimed in claim 1, characterized in that said homepage making unit of said client further comprises a data input means, a data processing and editing means, and an HTML file making and editing means for making and editing an HTML file which includes an instruction to call CGI, so as to unitary place and configure contents obtained by making and editing data and by making and editing texts and by CGI.

6. A storage medium for storing a software to be used in a client in a system comprising : at least a client having a software means for making a homepage ; and a server having means for managing and using said homepage made,
characterized in that said software further includes a homepage making unit, a network connecting unit and a data transmission unit,
so that after said network connecting unit receives, from a server side, a signal representing that an account is effective, then data are automatically transmitted from said data transmission unit to said server side, whereby at the same time when said client is made into connect with a network, said client automatically sends an HTML file for homepage and data to said server.

7. The storage medium as claimed in claim 6, characterized in that said client further has a setting/inputting means into which account informations and individual informations are written, so that said setting/inputting means stores written informations as setting files into a data storage means, whereby said network connecting unit and said data transmission unit of said client are individually operated to read at least one of account informations and individual informations from said setting file in said data storage means of said client.

8. The storage medium as claimed in claim 6, characterized in that said homepage making unit of said client further comprises a data input means, a data processing and editing means, and an HTML file making and editing means for making and editing an HTML file which includes an instruction to call CGI, so as to unitary place and configure contents obtained by making and editing data and by making and editing texts and by CGI.

9. A system for making and publishing a homepage, said system comprising at least a client having a software means for making a homepage, and a server having means for managing and using said homepage made,
characterized in that said system further includes a homepage making unit, a network connecting unit and a data transmission unit,
so that, through a network, a plurality of clients are distributed with such a software as operating that after said network connecting unit receives, from a server side, a signal representing that said account is effective, then data are automatically transmitted from said data transmission unit to said server side, whereby at the same time when said client is made into connect with a network, said client automatically sends an HTML file for homepage and data to said server.

10. The system as claimed in claim 9, characterized in that said client further has a setting/inputting means into which account informations and individual informations are written, so that said setting/inputting means stores written informations as setting files into a data storage means, whereby said network connecting unit and said data transmission unit of said client are individually operated to read at least one of account informations and individual informations from said setting file in said data storage means of said client.

11. The system as claimed in claim 9, characterized in that said homepage making unit of said client further comprises a data input means, a data processing and editing means, and an HTML file making and editing means for making and editing an HTML file which includes an instruction to call CGI, so as to unitary place and configure contents obtained by making and editing data and by making and editing texts and by CGI.

12. A private terminal device comprising:
a homepage making means for fetching data and editing said fetched data and texts to make an HTML file and data ;
a network connecting means for connecting through a network to a server; and
a data transmission means for transmitting homepage data made,
characterized in that after said network connecting unit receives, from a server side, a signal representing that said account is effective, then data are automatically transmitted from said data transmission means to said server side, whereby at the same time when said terminal device is made into connect with said network, said terminal device automatically sends an HTML file for homepage and data to said server.
